# EUROPÄISCHE PATENTANMELDUNG

(11) **EP 2 574 731 A2**
(43) Veröffentlichungstag der Anmeldung: **03.04.2013**
(21) Anmeldenummer: 12006667.5
(22) Anmeldetag: 22.09.2012
(51) Int. Cl.: F01D 11/00, F02C 7/28

(54) **Segmentiertes Bauteil**

(30) Priorität: 30.09.2011 DE 102011083814
(71) Anmelder: MTU Aero Engines GmbH, 80995 München (DE)
(72) Erfinder: Klingels, Hermann, 85221 Dachau (DE)

(57) **Zusammenfassung**

Die Erfindung betrifft ein Bauteil (10), insbesondere für eine Gasturbine, mit wenigstens zwei Bauteilsegmenten (12a, b), die unter Belassung eines Spalts (14) relativ zueinander angeordnet und mittels einer Dichteinrichtung (16) gegeneinander abgedichtet sind, wobei die Dichteinrichtung (16) wenigstens eine Bürstendichtung (18) umfasst. Die Erfindung betrifft weiterhin eine Gasturbine (11), insbesondere ein Flugzeugtriebwerk, mit einem derartigen Bauteil (10).

## Beschreibung

Die Erfindung betrifft ein segmentiertes Bauteil der im Oberbegriff des Patentanspruchs 1 angegebenen Art sowie eine Gasturbine mit einem derartigen Bauteil.

Zwischen den Turbomaschinen einer Gasturbine sind Gaskanäle angeordnet. In den Bereichen einer Gasturbine, in denen keine Kühlung erforderlich ist - beispielsweise im Verdichterbereich und am Austritt einer Niederdruckturbine - sind diese Gaskanäle oftmals integraler Bestandteil eines Gehäuses. Beispiele hierfür sind etwa Verdichterzwischengehäuse oder Turbinenaustrittsgehäuse. Im Bereich hoher Betriebstemperaturen sind diese Gaskanäle aus mechanischen Gründen oftmals segmentiert. Speziell zwischen den Turbinen angeordnete Lagerstrukturen, so genannte "Hot Struts" oder "Mid Turbine Frames", bei welchen Strukturstreben, Versorgungsleitungen und dergleichen den Heißgasstrom kreuzen, müssen vor den hohen Temperaturen geschützt werden, die während des Betriebs der Gastrubine im Gaskanal herrschen. Üblicherweise werden die Gaskanäle dabei aus segmentierten Verkleidungsteilen - sog. Fairings und/oder Gaskanalwandteilen, so genannten Panels - gebildet. Die Außenseite dieser segmentierten Bauteile ist von Kühl- bzw. Sperrluft umgeben. Diese Kühl- und Sperrluft hat einen höheren Druck als das im Gaskanal befindliche Heißgas. Auf diese Weise wird verhindert, dass das Heißgas aus dem Gaskanal durch Spalte zwischen den Bauteilsegmenten nach außen tritt. Stattdessen fließt die Kühl- bzw. Sperrluft aufgrund ihres höheren Drucks durch die Leckagestellen in den vom Heißgas durchfluteten Gaskanal.

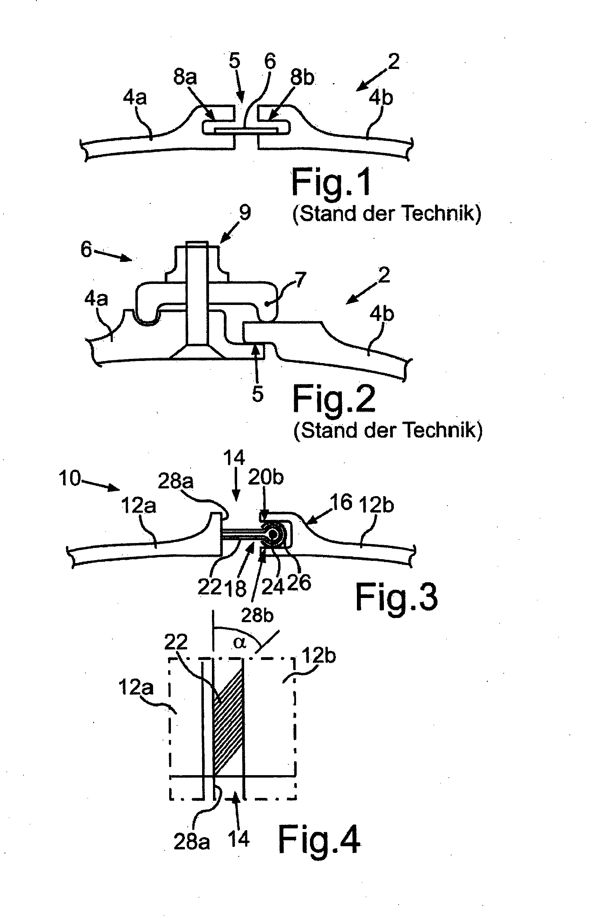

Um den Verbrauch an Kühl- bzw. Sperrluft möglichst gering zu halten, sind an den Leckagestellen - beispielsweise den Rändern der Bauteilsegmente - Dichteinrichtungen vorgesehen, welche den Spalt zwischen den Bauteilsegmenten abdichten. Aus dem Stand der Technik sind dabei verschiedene Ausgestaltungen dieser Dichteinrichtungen bekannt. In Fig. 1 ist beispielhaft eine schematische seitliche Schnittansicht eines aus dem Stand der Technik bekannten Bauteils 2 abgebildet, wobei das Bauteil 2 eine Dichtstelle eines Gaskanals einer Gasturbine umfasst. Das Bauteil 2, welches als Verkleidung (Fairing) eines Gaskanals einer Gasturbine ausgebildet ist, weist zwei Bauteilsegmente 4a, 4b auf, die zum Verringern der Leckageströmung durch einen Spalt 5 zwischen den Bauteilsegmenten 4a, 4b mit Hilfe einer als Blechstreifen (sog. Sealing Strip) ausgebildeten Dichtelement 6 gegeneinander abgedichtet sind. Der Blechstreifen 6 erstreckt sich zwischen korrespondierenden Nuten 8a, 8b an den Rändern der Bauteilsegmente 4a, 4b. Bei den Bauteilsegmenten 4a, 4b kann es sich sowohl um eine Verkleidung (Fairing) als auch um ein Gaskanalwandteil (Panel) handeln. Nachteilig an diesem Bauteil 2 bzw. dieser Dichteinrichtung 6 ist jedoch der Umstand, dass insbesondere unter wechselnden Betriebszuständen keine ausreichende Dichtheit gegeben ist.

In Fig. 2 ist als weiteres Beispiel eine schematische seitliche Schnittansicht eines aus dem Stand der Technik bekannten Bauteils 2 abgebildet, bei welchem sich die Ränder seiner Bauteilsegmente 4a, 4b überlappen. Die Bauteilsegmente 4a, 4b sind im Bereich ihrer Überlappungsstellen überschliffen (Ground Overlap). Die Dichteinrichtung 6 umfasst eine Spannpratze 7, die über eine Schraube-Mutter-Verbindung 9 am Bauteilsegment 4a befestigt ist und über welche die Bauteilsegmente 4a, 4b mit einer definierten Vorspannkraft nahezu spielfrei aufeinander gedrückt werden. Die Bauteilsegmente 4a, 4b können sich in Umfangsrichtung relativ zueinander ohne Spaltänderung verschieben. Allerdings ist der Fertigungsaufwand für dieses Bauteil 2 erheblich, wodurch entsprechend hohe Fertigungs- und Instandhaltungskosten anfallen. Zudem tritt ein hoher Verschleiß auf.

Aus der US 5,451,116 A ist eine Gasturbine mit einem Gaskanal bekannt, der ebenfalls aus segmentierten Bauteilen (Fairings und Panels) besteht bzw. gebildet ist. Die Dichtflächen der aneinander angrenzenden Bauteilsegmente werden - ähnlich wie in Fig. 2 dargestellt - mit Hilfe von Dreifußplatten (Tripod Plates) gegeneinander gedrückt.

Aufgabe der vorliegenden Erfindung ist es, ein segmentiertes Bauteil zu schaffen, welches auch unter wechselnden Betriebsbedingungen eine geringere Leckagerate aufweist und darüber hinaus einfacher und kostengünstiger herstellbar ist. Eine weitere Aufgabe der Erfindung ist es, eine Gasturbine mit einem derartigen Bauteil bereitzustellen.

Die Aufgaben werden erfindungsgemäß durch ein Bauteil mit den Merkmalen des Patentanspruchs 1 sowie durch eine Gasturbine gemäß Patentanspruch 14 gelöst. Vorteilhafte Ausgestaltungen mit zweckmäßigen Weiterbildungen der Erfindung sind in den jeweiligen Unteransprüchen angegeben, wobei vorteilhafte Ausgestaltungen des Bauteils als vorteilhafte Ausgestaltungen der Gasturbine und umgekehrt anzusehen sind.

Ein Bauteil, welches auch unter wechselnden Betriebsbedingungen eine geringere Leckagerate aufweist und darüber hinaus einfacher und kostengünstiger herstellbar ist, ist erfindungsgemäß dadurch geschaffen, dass die Dichteinrichtung wenigstens eine Bürstendichtung umfasst. Das Drahtpaket der Bürstendichtung erzeugt hierbei die Dichtwirkung, indem anströmendes Gas gezwungen wird, durch das Drahtpaket der Bürstendichtung zu strömen. Dieser Gasstrom bewirkt dabei eine Verdichtung des Drahtpakets und erhöht somit automatisch die Dichtwirkung der Bürstendichtung, indem die Freiräume zwischen den Drähten geschlossen werden. Die Drahtpakete der Bürstendichtung können grundsätzlich relativ leicht verformt werden, so dass eine hohe Dichtwirkung der Dichteinrichtung auch unter wechselnden Betriebsbedingungen - beispielsweise aufgrund schwankender Umgebungstemperaturen und -drücke sowie bei thermisch oder mechanisch verformten Anlageflächen - zuverlässig gewährleistet ist. Das Bauteil kann im Unterschied zum Stand der Technik zudem problemlos in Hochtemperaturbereichen verwendet werden, da keine Schraubverbindungen oder dergleichen erforderlich sind. Des Weiteren können Bürstendichtungen leicht montiert und ausgewechselt werden, wodurch sich entsprechende Kostenvorteile bei Herstellung und Reparatur des Bauteils ergeben. Weitere Kostenvorteile ergeben sich, da eine zuverlässige Abdichtung auch zwischen Bauteilsegmenten mit unregelmäßigen Oberflächen erzielt werden kann. Beispielsweise können mit Hilfe der Bürstendichtung auch Gussoberflächen ohne Nachbearbeitung und Glättung zuverlässig abgedichtet werden. Darüber hinaus besitzen Bürstendichtungen ein sehr geringes Gewicht sowie einen geringen Bauraumbedarf, wodurch das Bauteil einfacher an unterschiedliche Anforderungsprofile und Einsatzzwecke angepasst werden kann. Weitere Vorteile liegen in einem geringen Verschleiß an der Dichtstelle.

In einer vorteilhaften Ausgestaltung der Erfindung ist vorgesehen, dass die Bürstendichtung ein Drahtpaket umfasst, welches um einen Kerndraht gewickelt und mittels eines Klemmrohrs am Kerndraht festgelegt ist. Eine derartige Bürstendichtung ist flexibel, einfach und kostengünstig herstellbar. Je nach Einsatzzweck des Bauteils können die Drähte des Drahtpakets beispielsweise aus einem Metall bzw. einer Metalllegierung und/oder aus einem nicht-metallischen Material, beispielsweise aus Aramid, bestehen, wodurch die Dichteinrichtung optimal anpassbar ist. Weiterhin kann die Länge des Drahtpakets besonders einfach variiert werden, so dass räumlich beliebig ausgeführte Bauteilsegmentgeometrien abgedichtet werden können.

Weitere Vorteile ergeben sich, wenn das Drahtpaket der Bürstendichtung in einem Winkel zwischen 0° und 80°, insbesondere zwischen 30° und 60°, zu seiner zugeordneten Dichtfläche angeordnet ist. Unter einem Winkel zwischen 0° und 80° sind dabei insbesondere Winkel von 0°, 5°, 10°, 15°, 20°, 25°, 30°, 35°, 40°, 45°, 50°, 55°, 60°, 65°, 70°, 75° oder 80° sowie entsprechende Zwischenwinkel zu verstehen. Der Winkel kann dabei grundsätzlich mit oder gegen den Uhrzeigersinn ermittelt werden. Mit Hilfe einer derartigen Bürstendichtung können thermisch oder mechanisch induzierte Relativbewegungen der Bauteilsegmente aufgrund der Nachgiebigkeit der Drähte besonders gut ausgeglichen werden. Darüber hinaus ist hierdurch eine einfache Anpassbarkeit an unterschiedliche Bauteilsegmentgeometrien gegeben.

In einer weiteren vorteilhaften Ausgestaltung der Erfindung ist vorgesehen, dass die Bürstendichtung zumindest bereichsweise in einer Nut wenigstens eines Bauteilsegments angeordnet ist und/oder seitlich auf wenigstens einem der Bauteilsegmente aufliegt. Eine Nut erlaubt dabei eine besonders einfache Montage und Demontage der Bürstendichtung. Des Weiteren können Seitenflächen der Nut auch als Anlageflächen für das Drahtpaket verwendet werden, so dass die Bürstendichtung auch unter wechselnden Innen- und Außendruckverhältnissen zuverlässig abdichtet. Unter dem Begriff "Nut" ist daher im Rahmen der Erfindung auch eine Führungsnut zu verstehen. Indem die Bürstendichtung seitlich auf einem der Bauteilsegmente aufliegt können Relativbewegungen zwischen den Bauteilsegmenten besonders gut ausgeglichen werden, da nicht die Drahtspritzen, sondern die gesamte Seitenfläche des Drahtpakets der Bürstendichtung als Dichtfläche fungieren kann.

In weiterer Ausgestaltung der Erfindung umfasst die Dichteinrichtung ein Halteelement, insbesondere ein Halteblech, mittels welchem die Bürstendichtung an wenigstens einem der Bauteilsegmente festgelegt ist. Hierdurch kann die Bürstendichtung besonders einfach und betriebssicher am Bauteil festgelegt werden. Insbesondere ein als Halteblech ausgebildetes Halteelement stellt dabei ein besonders kostengünstiges Mittel dar, um die Bürstendichtung zumindest mittelbar festzulegen.

In einer weiteren vorteilhaften Ausgestaltung der Erfindung ist vorgesehen, dass das Halteelement an einem Bauteilsegment festgelegt ist und/oder zumindest bereichsweise in einer Nut eines Bauteilsegments angeordnet ist und/oder die Bürstendichtung umgreift. Auf diese Weise kann das Halteelement schnell, flexibel und kostengünstig am Bauteil bzw. dem Bauteilsegment befestigt werden. Beispielsweise kann das Halteelement mit wenigstens einem Bauteilsegment verschraubt oder vernietet sein. Des Weiteren kann das Halteelement beispielsweise durch eine Presspassung reibschlüssig in einer Nut des Bauteils festgelegt werden. Alternativ oder zusätzlich kann das Halteelement durch einfaches Umbiegen oder Bördeln am betreffenden Bauteilsegment befestigt werden.

Eine zuverlässige Dichtwirkung auch bei großen Druckdifferenzen zwischen der Innen- und der Außenseite des Bauteils wird in weiterer Ausgestaltung der Erfindung dadurch sichergestellt, dass die Dichteinrichtung ein Führungselement zum Abstützen des Drahtpakets der Bürstendichtung umfasst.

Weitere Vorteile ergeben sich, indem die Dichteinrichtung einen Dichtungsträger umfasst, an welchem die Bürstendichtung festgelegt ist. Hierdurch kann die Bürstendichtung besonders variabel positioniert werden. Der Dichtungsträger kann beispielsweise mit dem zugeordneten Bauteilsegment verschraubt, vernietet und/oder verschweißt werden.

In einer weiteren vorteilhaften Ausgestaltung der Erfindung ist vorgesehen, dass der Dichtungsträger an einem der Bauteilsegmente festgelegt ist. Dies stellt eine konstruktiv einfache Möglichkeit dar, um auch die Bürstendichtung mittelbar am Bauteil bzw. am Bauteilsegment zu befestigen.

Eine besonders stabile Verbindung der Bauteilsegmente sowie eine geringe Leckagerate werden in weiterer Ausgestaltung der Erfindung dadurch erzielt, dass eines der Bauteilsegmente und der Dichtungsträger eine Nut bilden, in welcher das benachbarte Bauteilsegment bereichsweise angeordnet ist. Mit anderen Worten ist vorgesehen, dass der Dichtungsträger und eines der Bauteilsegmente im montierten Zustand eine Nut ausbilden, in welche das als Dichtungspartner fungierende Bauteilsegment zur Montage des Bauteils eingeschoben wird.

In einer weiteren vorteilhaften Ausgestaltung der Erfindung ist vorgesehen, dass die Bauteilsegmente aufeinander geschoben und/oder ineinander gesteckt und/oder in einem Abstand zueinander angeordnet sind. Dies erlaubt eine besonders flexible Verbindung der beiden Bauteilsegmente sowie eine einfache Anpassbarkeit der Geometrie des zwischen den Bauteilsegmenten belassenen Spalts.

In weiterer Ausgestaltung der Erfindung ist vorgesehen, dass die Bauteilsegmente relativ zueinander bewegbar sind, wobei die Bürstendichtung ausgelegt ist, die Bauteilsegmente innerhalb eines vorgegebenen Betriebsparameterbereichs des Bauteils gegeneinander abzudichten. Der Begriff "bewegbar" bezeichnet dabei im Rahmen der vorliegenden Erfindung lediglich geringe Relativbewegungen. Die Bauteilsegmente des Bauteils sind mit anderen Worten als im Wesentlichen ortsfest zueinander anzusehen. Im Gegensatz zu fest miteinander verbundenen - beispielsweise verschweißten - Bauteilsegmenten erlaubt das erfindungsgemäße Bauteil jedoch weiterhin gewisse Relativbewegungen zwischen den einzelnen Bauteilsegmenten, so dass die Entstehung von thermisch oder mechanisch induzierten Spannungen sicher verhindert wird. Die Bürstendichtung ist dabei derart ausgelegt, dass sie unter Berücksichtigung aller Fertigungstoleranzen und aller zulässigen Relativbewegungen der Bauteilsegmente die Anlageflächen der Bauteilsegmente auch im ungünstigsten Betriebsfall noch berührt. Der Spalt zwischen den Bauteilsegmenten wird somit über den gesamten zulässigen Betriebsbereich des Bauteils zuverlässig abgedichtet.

In einer weiteren vorteilhaften Ausgestaltung der Erfindung ist das Bauteil als Verkleidungsteil (Fairing) und/oder als Gaskanalwandteil (Panel) und/oder als Diffusor und/oder als Leitgitter für eine Gasturbine ausgebildet. Hierdurch können die vorstehend erläuterten Vorteile wie beispielsweise gute Dichtwirkung auch bei thermisch oder mechanisch verformten Dichtstellen, geringer Verschleiß an den Dichtstellen, verringerte thermisch induzierte Spannungen, einfache und kostengünstige Montage, Vermeidung von Schraubverbindungen im Hochtemperaturbereich, Abdichtung auch auf rauen Oberflächen ohne Nacharbeit der betroffenen Flächen und verringerte Herstellkosten auch bei diesen sensiblen und sicherheitsrelevanten Gasturbinenbauteilen erzielt werden. Darüber hinaus beeinträchtigen Leckagen an Dichtstellen die Leistungsausbeute von Gasturbinen erheblich, so dass die erfindungsgemäß verbesserte Abdichtung der Bauteilsegmente den Wirkungsgrad der Anlage signifikant erhöht.

Ein weiterer Aspekt der Erfindung betrifft eine Gasturbine, insbesondere ein Flugzeugtriebwerk, mit wenigstens einem Bauteil gemäß einem der vorhergehenden Ausführungsbeispiele. Die im Zusammenhang mit dem erfindungsgemäßen Bauteil vorgestellten Ausführungsformen und Weiterbildungen sowie deren Vorteile gelten entsprechend für die erfindungsgemäße Gasturbine.

Indem das Bauteil einen Gaskanal in einem Verdichterbereich und/oder in einem Turbinenbereich der Gasturbine bildet, kann der Wirkungsgrad der Gasturbine aufgrund der verringerten Leckageströmung durch den Spalt zwischen den Bauteilsegmenten des Bauteils vorteilhaft gesteigert werden.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine schematische seitliche Schnittansicht eines aus dem Stand der Technik bekannten, segmentierten Bauteils;
- Fig. 2: eine schematische seitliche Schnittansicht eines weiteren, aus dem Stand der Technik bekannten Bauteils;
- Fig. 3: eine schematische seitliche Schnittansicht eines erfindungsgemäßen Bauteils gemäß einem ersten Ausführungsbeispiel;
- Fig. 4: eine schematische Aufsicht des in Fig. 3 gezeigten Bauteils;
- Fig. 5: eine schematische seitliche Schnittansicht des erfindungsgemäßen Bauteils gemäß einem zweiten Ausführungsbeispiel;
- Fig. 6: eine schematische seitliche Schnittansicht des erfindungsgemäßen Bauteils gemäß einem dritten Ausführungsbeispiel;
- Fig. 7: eine schematische seitliche Schnittansicht des erfindungsgemäßen Bauteils gemäß einem vierten Ausführungsbeispiel;
- Fig. 8: eine schematische Aufsicht einer in Fig. 7 gezeigten Bürstendichtung;
- Fig. 9: eine schematische seitliche Schnittansicht des erfindungsgemäßen Bauteils gemäß einem fünften Ausführungsbeispiel;
- Fig. 10: einen schematischen Längsschnitt durch einen Gaskanal einer Gasturbine;
- Fig. 11: einen schematischen Querschnitt des in Fig. 10 gezeigten Gaskanal; und
- Fig. 12: einen schematischen Querschnitt des erfindungsgemäßen Bauteils gemäß einem sechsten Ausführungsbeispiel.

Fig. 1 und Fig. 2, die beide aus dem Stand der Technik bekannte Bauteile 2 zeigen, wurden bereits einleitend beschrieben.

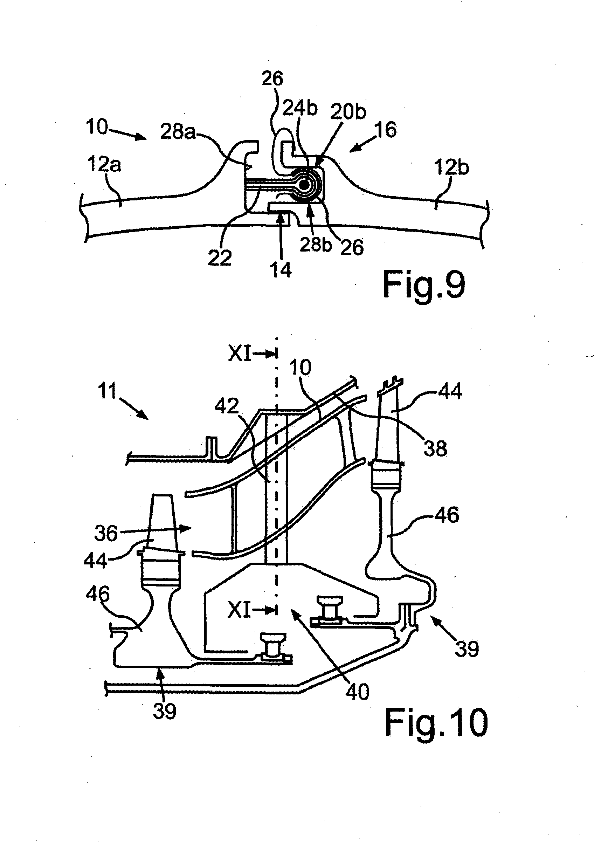

Fig. 3 zeigt eine schematische seitliche Schnittansicht eines erfindungsgemäßen Bauteils 10 gemäß einem ersten Ausführungsbeispiel. Das Bauteil 10, welches als Verkleidungsteil (Fairing) für eine Gasturbine 11 (s. Fig. 10) ausgebildet ist, umfasst zwei Bauteilsegmente 12a, 12b, die unter Belassung eines Spalts 14 in einem Abstand zueinander angeordnet und mittels einer Dichteinrichtung 16 gegeneinander abgedichtet sind. Die Dichteinrichtung 16 umfasst im gezeigten Ausführungsbeispiel eine Bürstendichtung 18, welche innerhalb einer Nut 20b des zweiten Bauteilsegments 12b leckagefrei festgelegt ist. In dem dargestellten Ausführungsbeispiel erstreckt sich die Nut 20b nur abschnittsweise entlang der Längsrichtung der Bürstendichtung 18 (normal zur Zeichenebene), wodurch eine gewichtssparende Bauweise erzielt wird. Die Bürstendichtung 18 umfasst ein Drahtpaket 22, welches um einen Kerndraht 24 gewickelt und mittels eines Klemmblechs 26 am Kerndraht 24 festgelegt ist. Es ist aber auch möglich, dass ein Klemmrohr zur Festlegung des Drahtpakets 22 verwendet wird. Zudem kann die Bürstendichtung 18 aus den genannten Einzelelementen separat oder einstückig aufgebaut sein. Es besteht auch die Möglichkeit geschweißte Bürstendichtungen zu verwenden.

Die Drahtspitzen des Drahtpakets 22 der Bürstendichtung 18 mit der zugeordneten Dichtfläche 28a des Bauteilsegments 12a in Kontakt. In der Nut 20b wird das Klemmblech 26 gegen eine sich über die gesamte Länge der Bürstendichtung 18 erstreckende Fläche des Bauteilsegments 12b gepresst, so dass sich eine sekundäre Dichtfläche 28b ausbildet und Gase gezwungen werden durch das Drahtpaket 22 der Bürstendichtung 18 zu strömen. Dieser Gasstrom bewirkt ein seitliches Anlegen des Drahtpakets 22 an das Klemmblech 26 mit einer Verdichtung des Drahtpakets 22 und erhöht somit automatisch die Dichtwirkung der Bürstendichtung 18. Die Drahtpakete 22 der Bürstendichtung 18 bestehen vorliegend aus einer hochtemperaturfesten Metalllegierung und können leicht verformt werden, so dass die Dichtwirkung der Dichteinrichtung 16 auch unter stark wechselnden Betriebsbedingungen zuverlässig gewährleistet ist. Die Bauteilsegmente 12a, 12b können daher in einem gewissen Umfang relativ zueinander bewegt werden, ohne dass es zu einer Erhöhung der Leckageströmung durch den Spalt 14 kommt. Alternativ oder zusätzlich kann die Bürstendichtung 18 auch nicht-metallische Drähte bzw. Drahtpakete 22 umfassen.

Des Weiteren besteht die Möglichkeit, dass gemäß einem nicht dargestellten Ausführungsbeispiel eine Halteplatte für das seitliche Anlegen der Drähte bzw. Drahtpakete 22 ausgebildet ist. Die Halteplatte kann mit der Bürstendichtung 18 verschweißt sein. Um die gewünschte Haltefunktion zu gewährleisten erstreckt sich zumindest ein Bereich der Halteplatte von einem Bereich innerhalb der Nut 20b zu einem Bereich, der in den Spalt 14 hineinragt. Die halteplatte ist dabei innerhalb der Nut 20b festgelegt.

Das Bauteil 10 kann im Unterschied den in Fig. 1 und Fig. 2 gezeigten Bauteilen 2 problemlos in Hochtemperaturbereichen der Gasturbine verwendet werden, da keine Schraubverbindungen oder dergleichen vorhanden sind. Des Weiteren kann die Bürstendichtung 18 leicht montiert und demontiert werden, wodurch sich entsprechende Kostenvorteile bei Herstellung und Reparatur des Bauteils 10 ergeben. Weitere Kostenvorteile ergeben sich, da die Dichtwirkung auch bei unregelmäßigen Oberflächen der Bauteilsegmente 12a, 12b gewährleistet ist. Daher kann vorteilhaft auf Nachbearbeitungen und Glättungen der Oberflächen verzichtet werden. Darüber hinaus besitzt die Bürstendichtung 18 ein sehr geringes Gewicht sowie einen geringen Bauraumbedarf, wodurch das Bauteil 10 besonders einfach an unterschiedliche Bauraumanforderungen angepasst werden kann. Weitere Vorteile liegen in einem geringen Verschleiß an der Dichtstelle.

Fig. 4 zeigt eine schematische Aufsicht des in Fig. 3 gezeigten Bauteils 10. Dabei ist gut erkennbar, dass die Drähte des Drahtpakets 22 der Bürstendichtung 18 in einem Winkel α zur Dichtfläche 28a angeordnet sind. Der Winkel α beträgt im vorliegenden Ausführungsbeispiel etwa 45°. Grundsätzlich können jedoch auch alternative Winkel α vorgesehen sein. Ebenso kann vorgesehen sein, dass der Winkel α entlang der Bürstendichtung 18 variiert, so dass auch Bauteilsegmente 12a, 12b mit komplexen Geometrien problemlos abgedichtet werden können.

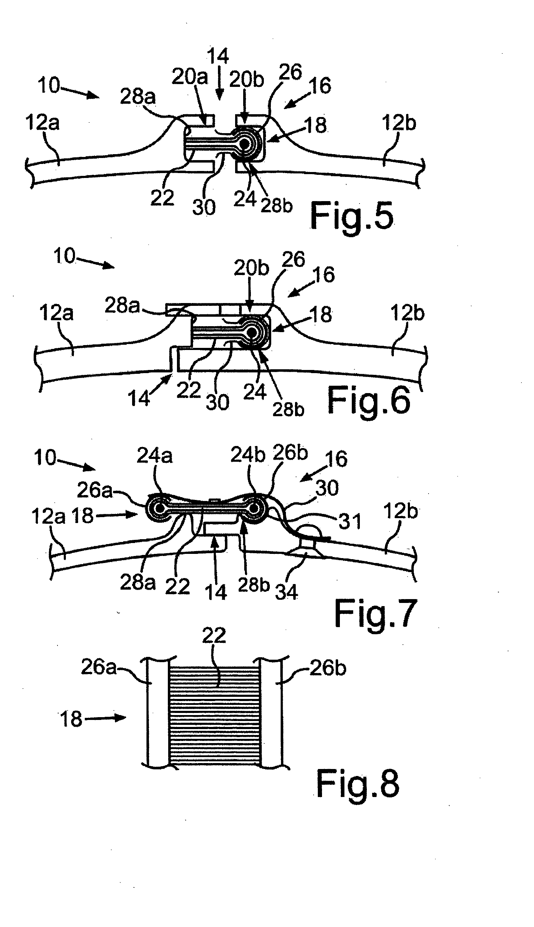

Fig. 5 zeigt eine schematische seitliche Schnittansicht des erfindungsgemäßen Bauteils 10 gemäß einem zweiten Ausführungsbeispiel. Im Unterschied zum ersten Ausführungsbeispiel umfasst die Dichteinrichtung 16 ein als Halteblech ausgebildetes Halteelement 30, mittels welchem die Bürstendichtung 18 über eine Presspassung in der Nut 20b des Bauteilsegments 12b leckagefrei festgelegt ist. Das Halteelement 30 umgreift dabei die Bürstendichtung 18 und stützt das Drahtpaket 22 der Bürstendichtung 18 seitlich ab, wodurch zudem ein Verdrehen der Bürstendichtung 18 innerhalb der Nut 20b zuverlässig verhindert wird. Das Halteelement 30 kann auch als integraler Bestandteil des Klemmblechs 26 ausgebildet sein. Dies bedeutet, dass das Klemmblech 26 nicht nur eine Klemm-, sondern auch eine Haltefunktion für die Bürstendichtung 18 innerhalb der Nut 20b ausübt. Eine separate Ausbildung eines Halteelements 30 ist dann nicht mehr notwendig. Darüber hinaus umfasst auch das erste Bauteilsegment 12a eine Nut 20a, welche die Dichtfläche 28a für das Drahtpaket 22 umfasst. Das Drahtpaket 22 kann somit auch bei sehr großen Druckunterschieden nicht derart verdreht oder gebogen werden, dass es nicht mehr an der Dichtfläche 28a anliegen würde. Hierdurch ist eine besonders zuverlässige Abdichtung des Spalts 14 auch bei extremen Betriebszuständen sichergestellt.

In Fig. 6 ist eine schematische seitliche Schnittansicht des erfindungsgemäßen Bauteils 10 gemäß einem dritten Ausführungsbeispiel gezeigt. Das Drahtpaket 22 der Bürstendichtung 18 ist am Halteelement 30 und in der Nut 20b abgestützt. Auch bei diesem Ausführungsbeispiel kann das Halteelement 30 als integraler Bestandteil des Klemmblechs 26 ausgebildet sein. Dies bedeutet auch in diesem Fall, dass das Klemmblech 26 nicht nur eine Klemm-, sondern auch eine Haltefunktion für die Bürstendichtung 18 innerhalb der Nut 20b ausübt. Eine separate Ausbildung eines Halteelements 30 ist dann nicht mehr notwendig. Weiterhin sind die beiden Bauteilsegmente 12a, 12b aufeinander geschoben und liegen unter Belassung des Spalts 14 aneinander an. Man erkennt, dass die Nut 20b derart gestaltet ist, dass das Bauteilsegment 12a zusätzlich in dieser geführt ist.

Fig. 7 zeigt eine schematische seitliche Schnittansicht des erfindungsgemäßen Bauteils 10 gemäß einem vierten Ausführungsbeispiel. Die Bürstendichtung 18 umfasst an beiden Enden Kerndrähte 24a, 24b, um welche das Drahtpaket 22 gewickelt und mittels jeweiliger Klemmrohre 26a, 26b festgelegt ist. Das Klemmrohr 26b ist in einer korrespondierenden Vertiefung 31 des zweiten Bauteilsegments 12b angeordnet. Des Weiteren liegt die Bürstendichtung 18 der Dichteinrichtung 16 seitlich auf stegförmigen Dichtflächen 28a, 28b der Bauteilsegmente 12a, 12b auf. Das als Halteblech ausgebildete Halteelement 30, mittels welchem die Bürstendichtung 18 am Bauteil 10 festgelegt ist, ist seinerseits mittels einer Nietverbindung 34 am Bauteilsegment 12b befestigt. Die beiden Bauteilsegmente 12a, 12b können somit in mehreren Richtungen relativ zueinander bewegt werden, ohne dass eine Verschlechterung der Dichtwirkung eintritt.

Fig. 8 zeigt eine schematische Aufsicht der in Fig. 7 gezeigten Bürstendichtung 18. In Zusammenschau mit Fig. 7 ist ersichtlich, dass die Drahtpakete 22 senkrecht zur Längsrichtung der Dichtflächen 28a, 28b verlaufen.

Fig. 9 zeigt eine schematische seitliche Schnittansicht des erfindungsgemäßen Bauteils 10 gemäß einem fünften Ausführungsbeispiel. Die Bauteilsegmente 12a, 12b liegen auch in diesem Beispiel unter Belassung des Spalts 14 aufeinander auf und umfassen an ihren Rändern jeweilige Nuten 20a, 20b. Im Unterschied zu den vorherigen Ausführungsbeispielen erstreckt sich das Klemmblech 26 aus der Nut 20b und ist durch Umbiegen oder Bördeln am Bauteilsegment 12b festgelegt. Hierdurch wird die Bürstendichtung 18 auf konstruktiv einfache Weise herausfallsicher in der Nut 20b gehalten.

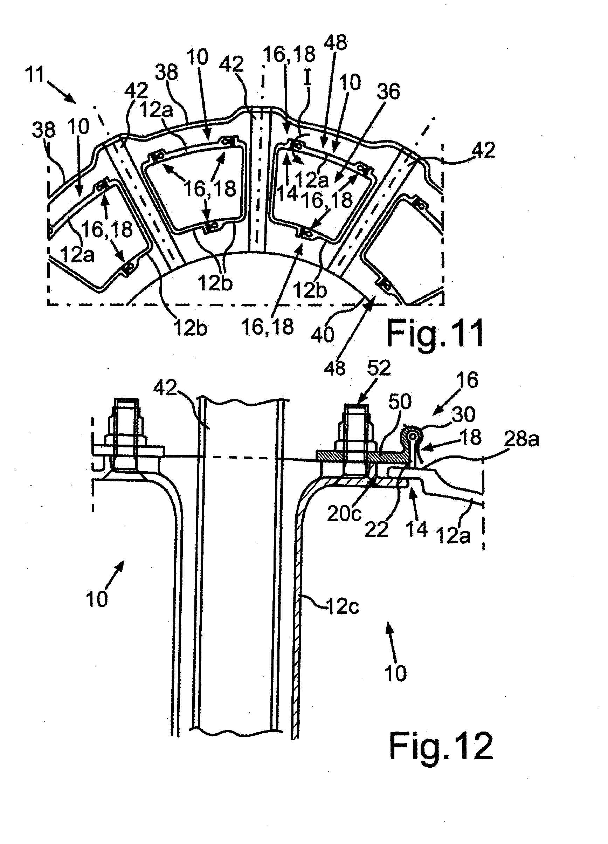

Fig. 10 zeigt einen schematischen Längsschnitt durch einen Gaskanal 36 einer Gasturbine 11 und wird im Folgenden in Zusammenschau mit Fig. 11 erläutert werden, in welcher ein schematischer Querschnitt des in Fig. 10 gezeigten Gaskanals 36 entlang der Schnittebene XI-XI gezeigt ist. Der grundsätzliche Aufbau der Gasturbine 11 ist dabei aus dem Stand der Technik bekannt. Die Gasturbine 11 umfasst ein Gehäuse 38, welches über mehrere Streben 42 mit einer Lagerkammer 40 verbunden ist. Der Gaskanal 36 ist im Bereich dieser Lagerstruktur zwischen zwei Turbinenkomponenten 39 angeordnet. Die Turbinenkomponenten 39 umfassen unter anderem mit Laufschaufeln 44 versehene Rotorscheiben 46.

Wie bereits erwähnt wird der Gaskanal 36 durch als Panels und Fairings ausgebildete Bauteilsegmente 12a, b gebildet, welche paarweise über Bürstendichtungen 18 umfassende Dichteinrichtungen 16 gegeneinander abgedichtet sind. Durch den Sperrluftraum bzw. äußeren Ringraum 48 wird Kühl- bzw. Sperrluft geleitet, welche einen höheren Druck besitzt als das durch die Gaskanäle 36 fließende Heißgas. Auf diese Weise wird verhindert, dass Heißgas entgegen der mit Pfeil I gekennzeichneten Fließrichtung aus den Gaskanälen 36 durch die Spalte 14 zwischen den Bauteilsegmenten 12a, b nach außen tritt. Stattdessen fließt die Kühl- bzw. Sperrluft aufgrund ihres höheren Drucks gemäß Pfeil I durch die Leckagestellen in die vom Heißgas durchfluteten Gaskanäle 36. Die Dichteinrichtungen 16 stellen dabei eine möglichst geringe Leckageströmung sicher.

Fig. 12 zeigt einen schematischen Querschnitt des erfindungsgemäßen Bauteils 10 gemäß einem sechsten Ausführungsbeispiel. Das Bauteil 10 ist dabei im Kontext mit einer der vorstehend beschriebenen Streben 42 abgebildet. Das Bauteil 10 umfasst analog zu den in Fig. 10 und Fig. 11 gezeigten Bauteilen 10 zwei Bauteilsegmente 12a, b. Die Dichtungseinrichtung 16 umfasst einen Dichtungsträger 50, an welchem die Bürstendichtung 18 mit Hilfe einer Halteeinrichtung 30 radial festgelegt ist. Der Dichtungsträger 50 selbst ist über eine Schraube/Mutter-Verbindung 52 am Bauteilsegment 12b festgelegt. Der Dichtungsträger 50 bildet zusammen mit dem Bauteilsegment 12b eine Nut 20c, in welcher das Bauteilsegment 12a bereichsweise angeordnet ist. Die Drahtenden des Drahtpakets 22 liegen auf der Dichtfläche 28a des Bauteilsegments 12a auf.

Es ist zu betonen, dass eine Vielzahl von weiteren Anordnungen und Kombinationen hinsichtlich der Anordnung und Befestigung der Bürstendichtungen 18 vorgesehen sein können. Die Erfindung beschränkt sich nicht nur auf die Anwendung bei den vorstehend beschriebenen Bauteilen 10, sondern kann grundsätzlich bei allen segmentierten Bauteilen 10 angewendet werden. Als nicht-abschließende Beispiele seien segmentierte Diffusoren oder Leitschaufelsegmente von Turbinen genannt.

## Patentansprüche

1. Bauteil (10), insbesondere für eine Gasturbine, mit wenigstens zwei Bauteilsegmenten (12a-c), die unter Belassung eines Spalts (14) relativ zueinander angeordnet und mittels einer Dichteinrichtung (16) gegeneinander abgedichtet sind, **dadurch gekennzeichnet, dass** die Dichteinrichtung (16) wenigstens eine Bürstendichtung (18) umfasst.

2. Bauteil (10) nach Anspruch 1, **dadurch gekennzeichnet, dass** die Bürstendichtung (18) ein Drahtpaket (22) umfasst, welches um einen Kerndraht (24) gewickelt und mittels eines Klemmrohrs und/oder Klemmblechs (26) am Kerndraht (24) festgelegt ist.

3. Bauteil (10) nach Anspruch 1 oder 2, **dadurch gekennzeichnet, dass** das Drahtpaket (22) der Bürstendichtung (18) in einem Winkel (α) zwischen 0° und 80°, insbesondere zwischen 30° und 60°, zu seiner zugeordneten Dichtfläche (28a, 28b) angeordnet ist.

4. Bauteil (10) nach einem der Ansprüche 1 bis 3, **dadurch gekennzeichnet, dass** die Bürstendichtung (18) zumindest bereichsweise in einer Nut (20a, 20b) wenigstens eines Bauteilsegments angeordnet ist und/oder seitlich auf wenigstens einem der Bauteilsegmente (12a, 12b) aufliegt.

5. Bauteil (10) nach einem der Ansprüche 1 bis 4, **dadurch gekennzeichnet, dass** die Dichteinrichtung (16) ein Halteelement (30), insbesondere ein Halteblech, umfasst, mittels welchem die Bürstendichtung (18) an wenigstens einem der Bauteilsegmente (12a, b) festgelegt ist.

6. Bauteil (10) nach Anspruch 5, **dadurch gekennzeichnet, dass** das Halteelement (30) als integraler Bestandteil des Klemmblechs oder Klemmrohrs 26 ausgebildet ist.

7. Bauteil (10) nach Anspruch 5 oder 6, **dadurch gekennzeichnet, dass** das Halteelement (30) an einem Bauteilsegment (12a, b) festgelegt ist und/oder zumindest bereichsweise in einer Nut (20a, b) eines Bauteilsegments (12a, b) angeordnet ist und/oder die Bürstendichtung (18) umgreift.

8. Bauteil (10) nach einem der Ansprüche 1 bis 7, **dadurch gekennzeichnet, dass** die Dichteinrichtung (16) einen Dichtungsträger (50) umfasst, an welchem die Bürstendichtung (18) festgelegt ist.

9. Bauteil (10) nach Anspruch 8, **dadurch gekennzeichnet, dass** der Dichtungsträger (50) an einem der Bauteilsegmente (12b) festgelegt ist.

10. Bauteil (10) nach Anspruch 8 oder 9, **dadurch gekennzeichnet, dass** eines der Bauteilsegmente (12b) und der Dichtungsträger (50) eine Nut (20c) bilden, in welcher das benachbarte Bauteilsegment (12a) bereichsweise angeordnet ist.

11. Bauteil (10) nach einem der Ansprüche 1 bis 10, **dadurch gekennzeichnet, dass** die Bauteilsegmente (12a, b) aufeinander geschoben und/oder ineinander gesteckt und/oder in einem Abstand zueinander angeordnet sind.

12. Bauteil (10) nach einem der Ansprüche 1 bis 11, **dadurch gekennzeichnet, dass** die Bauteilsegmente (12a, b) relativ zueinander bewegbar sind, wobei die Bürstendichtung (18) ausgelegt ist, die Bauteilsegmente (12a, b) innerhalb eines vorgegebenen Betriebsparameterbereichs des Bauteils (10) gegeneinander abzudichten.

13. Bauteil (10) nach einem der Ansprüche 1 bis 12, **dadurch gekennzeichnet, dass** dieses als Verkleidungsteil, insbesondere als Fairing und/oder als Gaskanalwandteil, insbesondere als Panel, und/oder als Diffusor und/oder als Leitschaufel für eine Gasturbine (11) ausgebildet ist.

14. Gasturbine (11), insbesondere Flugzeugtriebwerk, mit wenigstens einem Bauteil (10) gemäß einem der Ansprüche 1 bis 13.

15. Gasturbine (11) nach Anspruch 14, **dadurch gekennzeichnet, dass** das Bauteil (10) einen Gaskanal (36) in einem Verdichterbereich und/oder in einem Turbinenbereich der Gasturbine (11) bildet.
